# EUROPÄISCHE PATENTSCHRIFT

(11) **EP 2 065 186 B1**
(45) Veröffentlichungstag und Bekanntmachung des Hinweises auf die Patenterteilung: **28.03.2012**
(21) Anmeldenummer: 07023300.2
(22) Anmeldetag: 30.11.2007
(51) Int. Cl.: B32B 37/24, B32B 38/18

(54) **Verfahren zur Herstellung einer Leichtbauplatte**
Method for manufacturing a lightweight construction sheet
Procédé destiné à la fabrication d'un panneau de construction léger

(43) Veröffentlichungstag der Anmeldung: 03.06.2009
(73) Patentinhaber: Homag Holzbearbeitungssysteme AG, 72296 Schopfloch (DE)
(72) Erfinder: Schmid, Johannes, 82181 Starzach/Wachendorf (DE); Gauss, Achim, 72280 Dornstetten/Hallwangen (DE)
(74) Vertreter: HOFFMANN EITLE

(56) Entgegenhaltungen:
- EP-A1- 1 792 723
- WO-A1-2004/096542
- DE-A1- 2 228 210
- DE-A1- 19 909 998
- FR-A1- 2 171 949
- GB-A- 1 486 414
- US-A- 4 186 044
- US-A- 4 764 420
- US-A- 5 316 604

## Beschreibung

### Technisches Gebiet

Die Erfindung betrifft ein Verfahren zur Herstellung einer Leichtbauplatte mit zwei dünnwandigen Decklagen und mindestens einer zwischen Innenflächen der Decklagen angeordneten Kernlage aus Füllmaterial.

### Stand der Technik

Leichtbauplatten der eingangs genannten Art finden beispielsweise im Bereich der Möbel- und Türenindustrie verbreitet Anwendung. Die dünnwandigen Decklagen bestehen dabei häufig aus einer Furnier-, Kunststoff- oder Metallplattenlage geringer Wandstärke, die auf die Außenseite der Kernlage aus leichtem Füllmaterial aufgeklebt wird.

Als Kernlage kommen häufig Bahnen zum Einsatz, die weitgehend aus Stegen bestehen, die untereinander verbunden sind und Hohlräume verschiedenster Form einschließen. Bevorzugt sind dabei waben- oder rohrartige Strukturen, die einerseits in Verbindung mit den Decklagen eine sehr hohe Festigkeit verleihen, andererseits - bezogen auf das Volumen - ein extrem niedriges Gewicht besitzen.

Derartige aus dünnen Decklagen und einer leichten Kernlage bestehende Leichtbauplatten werden bisher in der Weise hergestellt, dass die dünnen Decklagen oder die Kernlage mit einer Klebstoffschicht bestrichen werden. Im Anschluss daran werden die Kernlage und die Decklagen im Durchlauf zusammengeführt und aneinander angedrückt. Ein derartiges Herstellungsverfahren ist beispielsweise in der EP 1 606 113 A offenbart.

Obgleich sich das bekannte Herstellungsverfahren in der Praxis bewährt hat, führt dieses zu einem hohen logistischen Aufwand, da eine große Menge an voluminösem Füllmaterial gelagert und bewegt werden muss. Dies gilt insbesondere, wenn unterschiedliche Plattendicken hergestellt werden sollen und somit eine Vielzahl unterschiedlich dicker Füllmaterialien vorgehalten werden muss. Dabei ermöglicht auch eine umfangreiche Lagerhaltung nur eine begrenzte Variabilität der herstellbaren Plattendicken.

Als weiterer Stand der Technik ist das Dokument FR 2 171 949 A bekannt. Es wird eine Vorrichtung offenbart, in der eine Wabenstruktur mit Decklagen versehen wird. Die Decklagen sind als Rollenware bereitgestellt, und werden vor dem Fügen auf die Wabenstruktur mit einem Haftmittel besprüht. Als weiteres Dokument ist die Schrift US 4,186,044 A bekannt, in der eine mit einer Haftschicht versehene Decklage auf eine Wabenstruktur gebracht wird. Die Haftschicht befindet sich beim Aufbringen auf die Wabenstruktur in einer sogenannten B-Stufe, und härtet nach dem Aufbringen aus.

Im Übrigen ist das Dokument WO 2004/096542 A1 bekannt; das ein Herstellungsverfahren für Kommunikationspaneele betrifft, die auf zumindest einer Seite mit einer Beschichtung aus Metall versehen sind. Zwei Beschichtungslagen werden auf einer Stützlage festgeklebt, indem die Beschichtungslage gegen die Stützlage gepresst wird, um ein kontinuierliches Paneel mit einer bestimmten Dicke auszubilden.

Weiter ist als Stand der Technik das Dokument US 5,316,604 A1 bekannt, das ein Herstellungsverfahren einer thermoplastischen Sandwichstruktur mit einem faserverstärkten oder nicht faserverstärkten thermoplastischen Kern, wie einem sogenannten Honeycomb, betrifft. Beim Zusammenfügen wird gemäß diesem Verfahren im Bereich einer Wärmezone das thermoplastische Material und der Kern auf eine Fügetemperatur erwärmt.

Als weiterer Stand der Technik ist das Dokument EP 1 792 723 A1 bekannt. Darin wird ein Verfahren und eine Vorrichtung zur Herstellung einer Leichtbauplatte offenbart, bei dem/der Leimauftragstationen vorgesehen sind, um eine Leimbeschichtung bereitzustellen.

### Darstellung der Erfindung

Es ist daher Aufgabe der vorliegenden Erfindung, ein Verfahren zur Herstellung einer Leichtbauplatte der eingangs genannten Art bereitzustellen, die bei geringem logistischem Aufwand einen zügigen und störungsfreien Produktionsprozess zu ermöglichen, sowie die Variabilität des Produktionsvorgangs zu steigern.

Diese Aufgabe wird erfindungsgemäß durch ein Verfahren zur Herstellung einer Leichtbauplatte nach Anspruch 1 gelöst. Besonders vorteilhafte Weiterbildungen der Erfindung sind in den abhängigen Ansprüchen angegeben.

Die Erfindung stellt ein Verfahren zur Herstellung einer Leichtbauplatte nach Anspruch 1 bereit. Durch das erfindungsgemäße Verfahren ergeben sich vollkommen neue Möglichkeiten, den Ablauf und insbesondere den Teilefluss einer Leichtbauplattenproduktion auszugestalten. So ist es insbesondere nicht mehr erforderlich, trotz Durchführung eines Durchlaufverfahrens die einzelnen, separaten Decklagenbauteile in einem Stapelbetrieb bereitzustellen und in den Prozess einzuführen. Vielmehr lässt sich durch das erfindungsgemäße Verfahren nicht nur der Produktionsprozess, sondern auch der Teilebereitstellungsprozess als kontinuierliches Verfahren ausgestalten. Auf diese Weise ergibt sich nicht nur ein besonders zügiger, sondern auch ein besonders störungsfreier Produktionsprozess. Darüber hinaus wird durch das erfindungsgemäße Verfahren auch die Variabilität des Produktionsvorgangs deutlich gesteigert, da die Abmessungen der Leichtbauplatten nicht auf die Abmessungen vorgefertigter Teile festgelegt sind, sondern - in gewissen Grenzen - erst nach Herstellung der Leichtbauplatte festgelegt werden müssen.

Vor diesem Hintergrund ist es auch besonders bevorzugt, dass gemäß einer Weiterbildung der Erfindung die Leichtbauplatte nach deren Herstellung in Werkstücke gewünschter Größe aufgeteilt wird. Dies bedeutet, dass mit dem erfindungsgemäßen Verfahren ein kontinuierlicher Leichtbauplattenstrang bereitgestellt wird und erst am Ende des Produktionsprozesses entschieden werden muss, welche Leichtbauplatten aus diesem Strang gewonnen werden.

### Kurze Beschreibung der Zeichnungen

- Fig. 1: zeigt schematisch eine Seitenansicht einer Vorrichtung zur Herstellung einer Leichtbauplatte, welche nicht Teil der vorliegenden Erfindung ist;
- Fig. 1a: zeigt schematisch eine Seitenansicht einer Abwandlung der in Fig. 1 gezeigten Vorrichtung;
- Fig. 2: zeigt schematisch eine Seitenansicht einer Vorrichtung zur Herstellung einer Leichtbauplatte gemäß einer ersten Ausführungsform der Erfindung;
- Fig. 3: zeigt schematisch eine Seitenansicht einer Vorrichtung zur Herstellung einer Leichtbauplatte gemäß einer zweiten Ausführungsform der Erfindung.

### Ausführliche Beschreibung bevorzugter Ausführungsformen

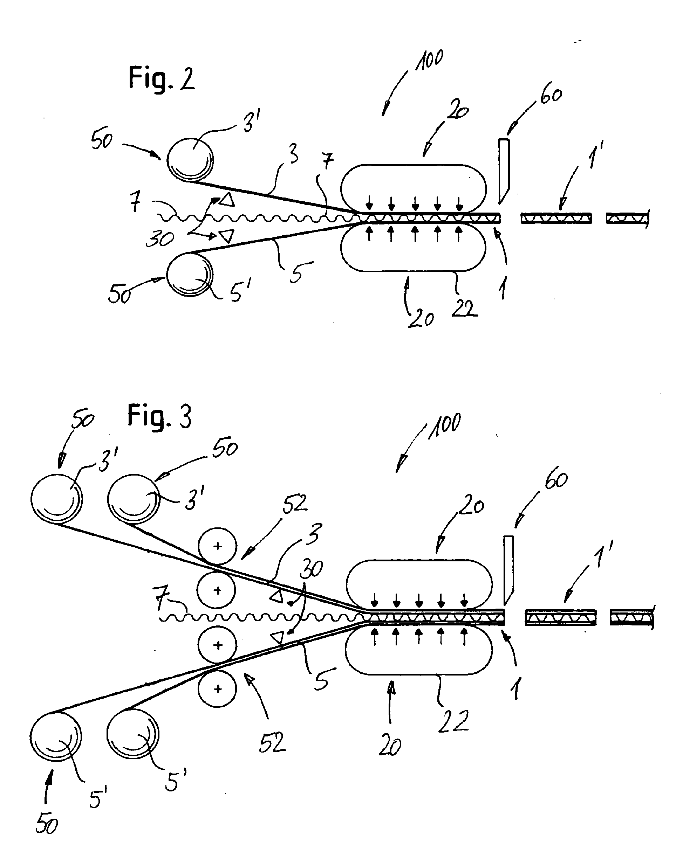

Bevorzugte Ausführungsformen der vorliegenden Erfindung werden nachfolgend ausführlicher unter Bezugnahme auf die Figuren 2 bis 3 beschrieben, die jeweils eine schematische Seitenansicht einer Vorrichtung zur Herstellung einer Leichtbauplatte gemäß der vorliegenden Erfindung zeigen.

Die in den Figuren 2 bis 3 gezeigten Vorrichtungen dienen zur Herstellung einer Leichtbauplatte 1, die zwei dünnwandige Decklagen 3, 5 und eine Zwischen den Innenflächen der Decklagen 3, 5 angeordnete Kernlage aus leichtem Füllmaterial aufweisen, wobei die Kernlage 7 aus leichtem Füllmaterial eine geringere mittlere Dichte besitzt als die dünnwandigen Decklagen 3, 5.

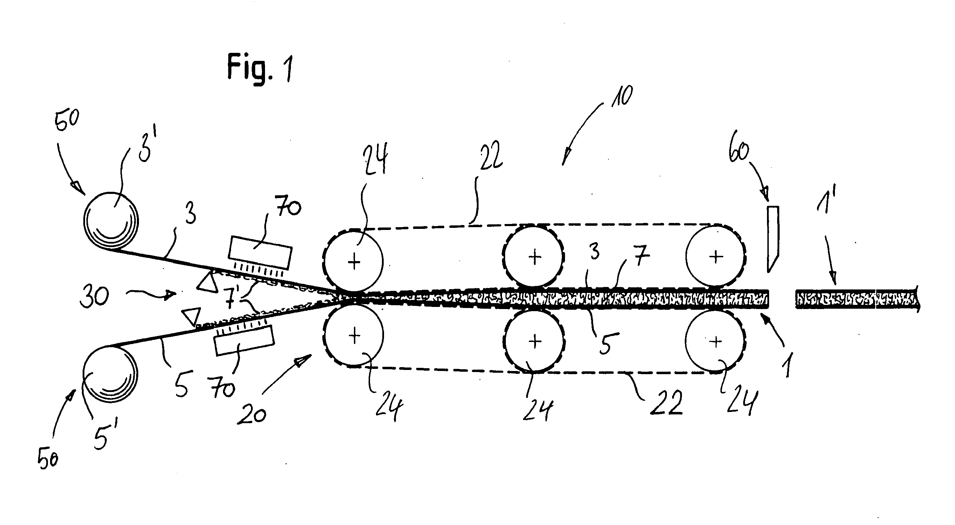

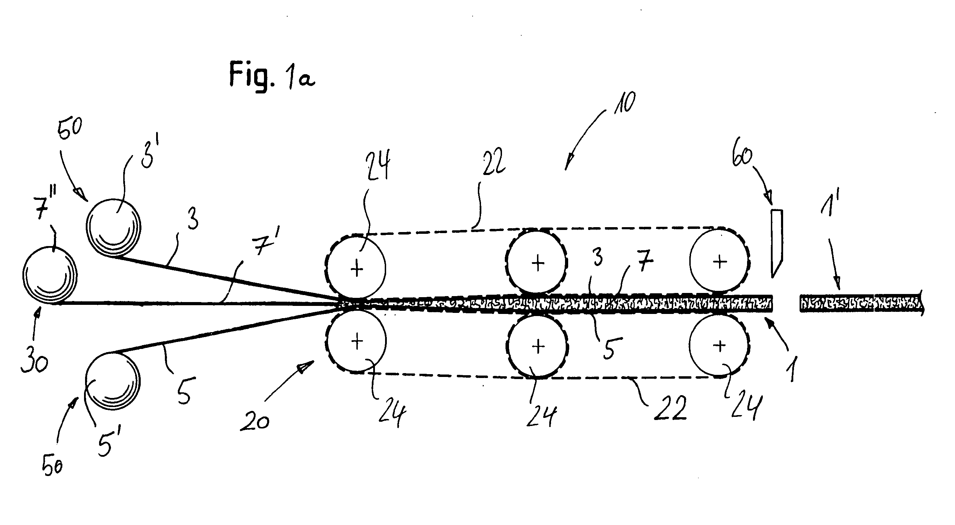

Eine Vorrichtung zur Herstellung einer solchen Leichtbauplatte 1, welche Vorrichtung nicht Teil der Erfindung ist, wird nachfolgend unter Bezugnahme auf Fig. 1 beschrieben. Bei der in Fig. 1 schematisch gezeigten Vorrichtung 10 wird das Ausgangsmaterial für die Decklagen 3, 5 als Endlosmaterial in Form von Rollware 3', 5' bereitgestellt, und zwar jeweils in einer Bereitstellungseinheit 50 für Decklagenendlosmaterial. Es ist jedoch zu beachten, dass das Material der Decklagen 3, 5 im Rahmen der vorliegenden Erfindung auch in Form einzelner, zugeschnittener Teile oder auf sonstige beliebige Weise bereitgestellt werden kann.

Das Material der Decklagen 3, 5 besteht in der vorliegenden Ausführungsform aus einem flexiblen Material, das sich für ein Aufrollen des Decklagenmaterials zu Rollenware 3', 5' eignet, wie beispielsweise Papier, insbesondere Melaminpapier, Karton, Furnier, Dünnspanplatten, MDF, HDF oder andere geeignete Materialien.

Ferner besitzt die Vorrichtung 10 eine Auftragseinrichtung 30 zum Auftragen einer aushärtbaren Masse 7' auf die Innenflächen der Decklagen 3, 5, beispielsweise in der Form von Leimauftragsdüsen. Alternativ kann es sich bei der Einrichtung 30 auch um eine Aktiviereinrichtung zum Aktiveren einer auf der jeweiligen Innenfläche der Decklagen 3, 5 vorgesehenen aushärtbaren Masse 7' handeln, wie beispielsweise einen Laser, eine UV-Bestrahlungseinrichtung oder dergleichen. Bei der aushärtbaren Masse 7' handelt es sich im Rahmen der dargestellten Vorrichtung bevorzugt um einen Kunststoff-basierten Klebstoff, wie beispielsweise einen schnellaushärtenden Kleber, einen Duroplast, wie beispielsweise einen Zwei-Komponentenkleber, PU-Akrylat oder dergleichen.

Darüber hinaus besitzt die Vorrichtung 10 eine Fördereinrichtung 20, die eingerichtet ist, das Decklagenmaterial 3, 5 aus der jeweiligen Bereitstellungseinheit 50 herauszuziehen und dabei an der Auftrags-Aktiviereinrichtung 30 entlang zu führen. Dabei ist die Fördereinrichtung 20 in der dargestellten Vorrichtung durch zwei Transportriemen 22 gebildet, die jeweils um Transporträder bzw. Umlenkeinrichtungen 24 endlos umlaufen und durch diese angetrieben werden. Dabei ist zu beachten, dass auch andere Fördereinrichtungen zum Einsatz kommen können, wie beispielsweise eine Fördervorrichtung mit einem andersartigen, umlaufenden Endlosförderelement (Kette, Magnetkette, etc.), eine Luftkissenfördereinrichtung (ggf. mit Riemen) oder auch Kombinationen hiervon.

Zwischen den Transportriemen 22 ist ein Förderspalt definiert, durch welchen die Decklagen 3, 5 hindurchgefördert werden. Dabei weist die Transporteinrichtung 20 zumindest im Bereich des Förderspalts eine nicht näher gezeigte Saugeinrichtung auf, die dafür sorgt, dass die Decklagen 3, 5 während des Fördervorgangs im Förderspalt am jeweiligen Transportriemen 22 anliegen. Es ist jedoch zu beachten, dass die Fördereinrichtung 20 auch andere Mittel aufweisen kann, die für ein abschnittsweises Anliegen der Decklagen 3, 5 an der Fördereinrichtung 20 sorgen.

Ferner dient die Fördereinrichtung 20 in der dargestellten Vorrichtung gleichzeitig als Fügeeinrichtung zum Zusammenführen der ersten und der zweiten Decklage 3, 5 derart, dass die jeweiligen Innenflächen einander zugewandt und zumindest abschnittsweise über die aushärtbare Masse 7' miteinander verbunden sind.

Der Fördereinrichtung 20 nachgelagert ist eine Trenneinrichtung 60, wie beispielsweise eine Säge oder dergleichen zum Aufteilen des die Fördereinrichtung 20 verlassenden Leichtbauplattenstranges 1 in einzelne Werkstücke 1'.

Nachfolgend wird beispielhaft der Betrieb der in Fig. 1 gezeigten Vorrichtung beschrieben. Das Decklagenendlosmaterial 3', 5' der Decklagen 3, 5 wird in den Förderspalt zwischen den Förderriemen 22 der Fördereinrichtung 20 zugeführt und durch die Fördereinrichtung 20 kontinuierlich gefördert. Dabei passieren die Decklagen 3,5 mit ihren Innenflächen die Auftrag/Aktiviereinrichtung 30, durch welche die aushärtbare Masse 7' auf die Innenflächen der Decklagen 3,5 aufgetragen bzw. eine derart vorgesehene aushärtbare Masse 7' aktiviert wird. Anschließend werden die Decklagen 3, 5 mit ihren Innenflächen derart zusammengeführt, dass sie über die aushärtbare Masse 7' miteinander verbunden sind, und zwar im Bereich des in Durchlaufrichtung stromaufwärts gelegenen Paares der Förderrollen 24. Hier werden den Decklagen 3, 5 zusammengedrückt, sodass sich eine sichere und gleichmäßige Verleimung im Bereich der Innenflächen über die aushärtbare Masse 7' ergibt.

Während des Fördervorganges liegen die Decklagen 3, 5 aufgrund der Unterdruckeinrichtung an dem Förderriemen 22 im Förderspalt an. Da sich der Förderspalt, wie in Fig. 1 zu erkennen ist, in Durchlaufrichtung der Förderrichtung 20 aufweitet, werden die Decklagen 3, 5 sukzessive auseinander bewegt, während jedoch die jeweiligen Innenflächen weiterhin über die aufgetragene aushärtbare Masse 7' miteinander verbunden sind. Nach Erreichen eines gewünschten Abstandes bzw. einer gewünschten Dicke der Leichtbauplatte im Bereich der mittleren Förderreihen 24 wird der Förderspalt konstant gehalten, sodass die aushärtbare Masse 7' unter konstanten Bedingungen aushärten kann, wobei das Aushärten auch durch zusätzliche Mittel unterstützt werden kann, wie beispielsweise eine Heiz- oder Kühleinrichtung.

Am stromabwärts gelegenen Ende der Fördereinrichtung 20 tritt ein Leichtbauplattenstrang 1 aus der Fördereinrichtung 20 aus, wobei die aushärtbare Masse 7' zumindest teilweise ausgehärtet ist. Anschließend wird dieser Leichtbauplattenstrang 1 mittels der Aufteileinrichtung 60 in einzelne Werkstücke 1' aufgeteilt. In diesen Leichtbauplatten-Werkstücken 1' bildet die bei der Herstellung auf die Innenflächen aufgebrachte, aushärtbare Masse 7' eine Kernlage aus leichtem Füllmaterial, deren Dichte geringer ist als diejenige der Decklagen 3, 5. Die so hergestellte Leichtbauplatte kann nun auf beliebige Weise weiterverarbeitet werden, beispielsweise mit einer Kante versehen, bedruckt oder auf sonstige Weise veredelt werden.

Obgleich in Fig. 1 nicht gezeigt, können die Decklagen 3, 5 auch mehrere Schichten aufweisen, von denen wiederum eine oder mehrere als Endlosmaterial bereitgestellt werden kann. Für die in Fig. 1 gezeigte Vorrichtung bedeutet dies beispielsweise, dass die Decklage 3 durch zwei oder mehrere Endlosmaterialbahnen 3' bereitgestellt wird, und dass die Decklage 5 ebenfalls durch zwei oder mehrere Endlosmaterialbahnen 5 bereitgestellt wird. Zu diesem Zweck kann die in Fig. 1 gezeigte Ausführungsform weitere Einrichtungen (wie gezeigt) aufweisen, um die mehreren Endlosmaterialbahnen 3' bzw. 5' jeweils zu einer Decklage 3 bzw. 5 zu verbinden, wie beispielsweise eine weitere Haftmittel-Auftrag-/Aktiviereinrichtung und eine nachgelagerte Bahnverpresseinrichtung.

Ferner kann die Vorrichtung 1 auch eine oder mehrere Druckeinheiten 70 zum Bedrucken des Decklagenendlosmaterials 3', 5' aufweisen, von denen zwei in Fig. 1 schematisch dargestellt sind. Hierbei kann es sich beispielsweise um eine Ink-Jet-Druckeinheit oder eine andere geeignete Druckeinheit handeln. Auf diese Weise lässt sich die Produktion weiter flexibilisieren. Insbesondere kann man mit einem einzigen Rollensatz von Decklagenendlosmaterial 3', 5' jedes beliebige Oberflächenmuster herstellen, so dass kontinuierlich und ohne aufwändige Rollenwechsel gearbeitet werden kann.

Eine Abwandlung der in Fig. 1 gezeigten Vorrichtung ist in Fig. 1a schematisch dargestellt. Diese zeichnet sich dadurch aus, dass die Auftrageinheit 30 für die aushärtbare Masse 7' durch eine Bereitstellungseinheit 30 für eine Endlosbahn der aushärtbaren Masse 7' gebildet ist. Die aushärtbare Masse wird somit bei dieser Abwandlung als Endlosbahn bereitgestellt und in den Förderspalt zwischen die Endlosmaterialbahnen 3' bzw. 5' zugeführt. Die Endlosbahn der aushärtbaren Masse 7' kann dabei aus den oben genannten Materialien bestehen, das ggf. auf ein Trägermaterial aufgebracht sein kann. Dabei kann die Endlosbahn der aushärtbaren Masse 7' ggf. auch perforiert oder streifenförmig gebildet sein.

Auf dem Grundgedanken des Verwendens von Endlosmaterial für die Decklagen basiert auch die in Fig. 2 schematisch dargestellte, erste Ausführungsform der Erfindung, die nachfolgend erläutert wird. Bei der in Fig. 2 gezeigten Vorrichtung 100 kommt prinzipiell dasselbe Endlosmaterial 3', 5' für die Decklagen 3, 5 zum Einsatz, wie es oben stehend erläutert wurde. Dieses wird ebenfalls jeweils in einer Bereitstellungseinheit 50 zu einer Fördereinrichtung 20 bereitgestellt, die jedoch in der vorliegenden Ausführungsform kein Unterdruckmittel oder dergleichen aufweisen muss.

Darüber hinaus weist die in Fig. 2 gezeigte Vorrichtung 100 ebenfalls eine Auftrag-Aktiviereinrichtung 30 zum Auftragen und/oder Aktivieren einer aushärtbaren Masse auf, die dazu eingerichtet ist, die aushärtbare Masse (nicht gezeigt) auf die Innenflächen der Decklagen 3, 5 und/oder auf eine zwischen den Decklagen 3, 5 zugeführte Kernlage 7 aus leichtem Füllmaterial aufzutragen. Bei der Kernlage 7 kann es sich beispielsweise um ein Wabenmaterial oder ein geschäumtes Material handeln, das eine geringere mittlere Dichte besitzt als die Decklagen 3, 5. Der Fördereinrichtung 20 nachgelagert besitzt die Vorrichtung 100 ebenfalls eine Trenneinrichtung 60, beispielsweise eine Säge oder dergleichen.

Der Betrieb der in Fig. 2 gezeigten Vorrichtung 100 vollzieht sich beispielsweise wie folgt. Das durch die Bereitstellungseinheiten 50 bereitgestellte Decklagenendlosmaterial 3', 5' wird in den zwischen den Förderriemen 22 der Fördereinrichtung 20 gebildeten Förderspalt eingezogen und dabei an der Auftrag/- Aktiviereinrichtung 30 vorbeigeführt, um mit der aushärtbaren Masse (nicht gezeigt) bestrichen bzw. aktiviert zu werden. Gleichzeitig wird im Bereich zwischen den Decklagen 3, 5 die Kernlage 7 zugeführt und ebenfalls in den Förderspalt der Fördervorrichtung 20 gefördert. Dort werden die Decklagen 3, 5 mit der Kernlage 7 verpresst, sodass eine sichere Verleimung erzielt wird und die aushärtbare Masse aushärten kann.

Am stromabwärts gelegenen Ende der Fördereinrichtung 20 tritt ein Leichtbauplattenstrang 1 aus der Fördereinrichtung 20 aus und wird dort mittels einer Trenneinrichtung 60 in einzelne Werkstücke 1' aufgeteilt, die dann wie oben beschrieben, weiterverarbeitet werden können.

Eine zweite bevorzugte Ausführungsform einer Vorrichtung 100 ist in Fig. 3 schematisch dargestellt. Diese unterscheidet sich von der in Fig. 2 gezeigten Ausführungsform dadurch, dass die Decklagen 3, 5 jeweils durch mehrere Endlosmaterialbahnen 3' bzw. 5' gebildet werden. Zu diesem Zweck weist die in der Fig. 3 gezeigten Vorrichtung 100 für jede Decklage 3, 5 mehrere Bereitstellungseinheiten 50 auf. Darüber hinaus besitzt die in Fig. 3 gezeigte Ausführungsform 100 eine Bahnverbindungseinheit 52, welche die Endlosmaterialbahnen 3' bzw. 5' beispielsweise mit einem Haftmittel versehen und miteinander verpressen kann. Im Übrigen entsprechend Konstruktion und Betrieb der in Fig. 3 gezeigten zweiten Ausführungsform derjenigen gemäß Fig. 2.

## Patentansprüche

1. Verfahren zur Herstellung einer Leichtbauplatte (1) mit zwei dünnwandigen Decklagen (3, 5) und mindestens einer zwischen Innenflächen der Decklagen angeordneten Kernlage (7) aus ***leichtem*** Füllmaterial, insbesondere ein Wabenmaterial oder ein geschäumtes Material, wobei das Füllmaterial eine geringere mittlere Dichte besitzt als die Decklagen (3, 5), mit den Schritten:
- Bereitstellen einer ersten Decklage (3) und einer zweiten Decklage (5),
- Zuführen der Kernlage (7) im Bereich ***zwischen*** den Decklagen (3, 5),
- Zusammenführen der ersten und der zweiten Decklage (3, 5) derart, dass die jeweiligen Innenflächen der Decklagen einander zugewandt und zumindest abschnittsweise über die Kernlage (7) miteinander verbunden sind,
wobei
- zumindest eine der Decklagen (3, 5) als Endlosmaterial (3', 5'), insbesondere als Rollenware, bereitgestellt wird,
- die Decklagen (3, 5) jeweils an einer Aktivierungseinrichtung (30) vorbeigeführt werden, damit eine auf den Decklagen (3, 5) befindliche, aushärtbare Masse ***zur Verleimung*** zwischen der Kernlage (7) und der jeweiligen Decklage (3, 5) aktiviert wird,
- die aushärtbare Masse (7') durch einen Kunststoff, insbesondere Klebstoff, gebildet wird, der ausgewählt ist aus schnell aushärtenden Klebern, insbesondere Duroplaste wie 2-Komponentenkleber, PU und Acrylate,
- das Material der Decklagen (3, 5) ausgewählt ist aus Papier, insbesondere Melaninpapier, Karton, Furnier, Dünnspanplatte, MDF und HDF.

2. Verfahren nach einem der vorhergehenden Ansprüche, **dadurch gekennzeichnet, dass** die Leichtbauplatte (1) nach deren Herstellung in Werkstücke (1') gewünschter Größe aufgeteilt wird.

3. Verfahren gemäß Anspruch 1 oder 2, **dadurch gekennzeichnet, dass** die aushärtbare Masse auf die Innenfläche der Decklagen (3, 5) aufgetragen wird.

4. Verfahren gemäß einem der vorhergehenden Ansprüche, **dadurch gekennzeichnet, dass** die Decklagen (3,5) mit der Kernlage (7) verpresst werden, so dass eine sichere Verleimung erzielt wird und die aushärtbare Masse aushärten kann.

5. Verfahren gemäß einem der vorhergehenden Ansprüche, **dadurch gekennzeichnet, dass** die Decklagen (3, 5) jeweils durch mehrere Endlosmaterialien (3', 5') gebildet werden.

## Claims

1. Method for producing a light building board (1) having two thin-walled cover layers (3, 5) and at least one core layer (7) made from light filling material, in particular a honeycomb material or a foamed material, arranged between inner surfaces of the cover layers, wherein the filling material has a lower average density than the cover layers (3, 5), having the steps:
- providing a first cover layer (3) and a second cover layer (5),
- feeding the core layer (7) in the region between the cover layers (3, 5),
- combining the first and the second cover layer (3, 5) such that the particular inner surfaces of the cover layers are facing one another and are joined to one another at least in some sections over the core layer (7),
wherein
- at least one of the cover layers (3, 5) is provided as a continuous material (3', 5'), in particular as rolled goods,
- the cover layers (3, 5) are guided in each case past an activation device (30), so that a curable composition located on the cover layers (3, 5) is activated for gluing between the core layer (7) and the particular cover layer (3, 5),
- the curable composition (7') is formed by a synthetic material, in particular adhesive, which is selected from quick-curing adhesives, in particular thermosetting plastics, such as 2-component adhesives, PU and acrylates,
- the material of the cover layers (3, 5) is selected from paper, in particular melanine paper, cardboard, veneer, thin particle board, MDF and HDF:

2. Method according to one of the preceding claims, **characterised in that** the light building board (1), after production thereof, is divided into workpieces (1') of required size.

3. Method according to claim 1 or 2, **characterised in that** the curable composition is applied to the inner surface of the cover layers (3, 5).

4. Method according to one of the preceding claims, **characterised in that** the cover layers (3, 5) are moulded with the core layer (7) so that secure gluing is achieved and the curable composition may cure.

5. Method according to one of the preceding claims, **characterised in that** the cover layers (3, 5) are formed in each case by several continuous materials (3', 5').

## Revendications

1. Procédé de fabrication d'un panneau de construction légère (1) avec deux couches de couverture (3, 5) et au moins une couche centrale (7) placée entre des surfaces internes des couches de couverture et constituée d'un matériau de remplissage léger, notamment un matériau en nid d'abeilles ou un matériau expansé, le matériau de remplissage ayant une densité moyenne inférieure à celle des couches de couverture (3, 5), avec les étapes de :
- préparation d'une première couche de couverture (3) et d'une deuxième couche de couverture (5),
- placement de la couche centrale (7) dans la zone située entre les couches de couverture (3, 5),
- réunion de la première et de la deuxième couche de couverture (3, 5) de telle sorte que les surfaces internes respectives des couches de couverture sont en face l'une de l'autre et sont assemblées au moins par segments par l'intermédiaire de la couche centrale (7),
- au moins l'une des couches de couverture (3, 5) étant fournie sous forme de matériau continu (3', 5'), notamment en rouleaux,
- les couches de couverture (3, 5) passant à chaque fois devant un dispositif d'activation (30) pour qu'une masse durcissable se trouvant sur les couches de couverture (3, 5) soit activée pour le collage entre la couche centrale (7) et la couche de couverture respective (3, 5),
- la masse durcissable (7') étant formée par une matière plastique, notamment un adhésif, qui est choisi parmi des adhésifs durcissant rapidement, notamment des matières thermodurcissables telles que des adhésifs bi-composants, des polyuréthanes et des acrylates,
- et le matériau des couches de couverture (3, 5) étant choisi parmi le papier, notamment le papier mélaminé, le carton, le placage, l'aggloméré mince, le MDF et le HDF.

2. Procédé selon la revendications précédente, **caractérisé en ce que** le panneau de construction légère (1) est divisé après sa fabrication en pièces (1') de dimension souhaitée.

3. Procédé selon la revendication 1 ou 2, **caractérisé en ce que** la masse durcissable est appliquée sur la surface interne des couches de couverture (3, 5).

4. Procédé selon l'une des revendications précédentes, **caractérisé en ce que** les couches de couverture (3, 5) sont pressées avec la couche centrale (7) de manière à pouvoir obtenir un collage solide et à pouvoir durcir la masse durcissable.

5. Procédé selon l'une des revendications précédentes, **caractérisé en ce que** les couches de couverture (3, 5) sont formées à chaque fois par plusieurs matériaux continus (3', 5').
